# EUROPÄISCHE PATENTSCHRIFT

(11) **EP 1 836 408 B1**
(45) Veröffentlichungstag und Bekanntmachung des Hinweises auf die Patenterteilung: **17.03.2010**
(21) Anmeldenummer: 06706212.5
(22) Anmeldetag: 12.01.2006
(51) Int. Cl.: F16D 55/00, F16D 65/097

(54) **BREMSZANGE**
CALIPER
ETRIER DE FREIN

(30) Priorität: 12.01.2005 DE 102005001482
(43) Veröffentlichungstag der Anmeldung: 26.09.2007
(73) Patentinhaber: Gustav Magenwirth GmbH & Co. KG, 72574 Bad Urach (DE)
(72) Erfinder: RUOPP, Michael, 89180 Berghülen (DE)
(74) Vertreter: Friese, Martin
(86) Internationale Anmeldenummer: PCT/EP2006/000240
(87) Internationale Veröffentlichungsnummer: WO 2006/074936

(56) Entgegenhaltungen:
- EP-A- 0 119 466
- WO-A-2004/076885
- US-A- 4 460 071
- US-A- 4 505 361
- US-A- 4 537 292

## Beschreibung

Die vorliegende Erfindung betrifft eine Bremszange gemäß dem Oberbegriff von Anspruch 1. So eine Bremszange geht z.B aus EP-A-119 466 hervor.

Die deutsche Offenlegungsschrift DE 148 356 A offenbart eine Bremszange gemäß dem Oberbegriff von Anspruch 1. Bei der bekannten Bremszange weist der Bremsbelag einen im wesentlichen kreisförmigen Abschnitt auf, der sich beim Bremsen an einer kreisabschnittsförmig ausgebildeten Widerlagerfläche abstützt, die gleichzeitig den Bremsbelag als Bremsbelagabstützvorrichtung nach unten abstützt. An der der Widerlagerfläche gegenüberliegenden Seite weist der Bremsbelag einen Arm mit einer Aufnahmeöffnung auf, in der ein Bolzen zur Sicherung des Bremsbelags in dem Gehäuse angeordnet ist. Die bekannte Bremszange hat den Nachteil, dass infolge der beim Bremsen entstehenden Wärmeausdehnung des Bremsbelags der Bremsbelag zwischen dem Bolzen und der Widerlagerfläche geklemmt wird, derart, dass eine erhebliche Gefahr des Festsitzens der Bremsbeläge und des damit verbundenen Blockierens der Bremse entsteht.

Die WO 2004/076885 A1 offenbart ebenfalls eine Bremszange gemäß dem Oberbegriff von Anspruch 1. Die Aufnahmeöffnung des Bremsbelags, in die ein Bolzen zur Sicherung des Bremsbelags in das Gehäuse angeordnet wird, weist ein Langloch auf, um die Wärmeausdehnung des Bremsbelags beim Bremsen auszugleichen. Diese bekannte Bremszange hat den Nachteil, dass der Bremsbelag beim Fahren in Schwingungen geraten und vibrieren kann, was wegen der damit verbundenen Geräuschentwicklung unerwünscht und störend ist.

Der Erfindung liegt daher die Aufgabe zugrunde, eine Bremszange anzugeben, bei der die Bremsbeläge derart anordbar sind, dass einerseits beim Bremsvorgang die Gefahr eines unerwünschten Blockierens, als auch andererseits beim Fahren die Gefahr des Vibrierens der Bremse wesentlich verringert ist.

Diese Aufgabe der Erfindung wird mit einer Bremszange gemäß den Merkmalen von Anspruch 1 gelöst. Vorteilhafte Ausgestaltungen der Erfindung sind in den abhängigen Ansprüchen angegeben.

Diese Bremszange hat den Vorteil, dass die Bremsbeläge in dem Gehäuse mit der Bremsbelagsicherungsvorrichtung mit Spiel zum Ausgleich der beim Bremsen auftretenden Wärmeausdehnung angeordnet werden können, und gleichzeitig durch die Vorspannvorrichtung gewährleistet ist, dass die Bremsbeläge immer in einer definierten Position angeordnet sind, d.h. vorzugsweise an der Widerlagerfläche anliegend, derart, dass keine unerwünschten Schwingungen und damit verbundenen Geräusche beim Fahren entstehen. Es ist klar, dass die Vorspannkraft der Vorspannvorrichtung derart gewählt werden soll, dass einerseits der Bremsbelag den beim Fahren auftretenden Stößen nicht von der Widerlagerfläche entfernt wird und andererseits nicht so groß ist, dass durch die zwischen der Widerlagerfläche und dem Bremsbelag eine Gefahr des Festsetzens des Bremsbelags entsteht. Dazu ist die Vorspannvorrichtung derart ausgebildet, dass sie einen in das Gehäuse eingesetzten Bremsbelag in eine definierte Position vorspannt.

Vorzugsweise wird durch die Vorspannvorrichtung ein in die Bremszange eingesetzter Bremsbelag gegen die Widerlagerfläche und die Bremsbelagabstützvorrichtung vorgespannt. Dazu kann beispielsweise die Vorspannvorrichtung oberhalb des Bremsbelags angeordnet sein und eine Kraft auf dem Bremsbelag in Richtung der Bremsbelagabstützvorrichtung ausüben. Der Bremsbelag und die Bremsbelagabstützvorrichtung sind dabei vorzugsweise derart ausgebildet, dass der Bremsbelag in Richtung der Widerlagerfläche vorgespannt wird. Vorteilhafterweise umfaßt die Vorspannvorrichtung gemäß einer Ausführung der Erfindung eine Federvorrichtung, die an der Oberseite von einem in das Gehäuse eingesetzten Bremsbelag angreift. Die Vorspannvorrichtung kann beispielsweise eine Blattfeder umfassen bzw. vorzugsweise mehrere Blattfedern umfassen, die jeweils an ein in das Gehäuse eingesetzten Bremsbelag angreifen.

Erfindungsgemäß kann die Vorspanneinrichtung derart ausgebildet sein, dass sie einen in die Bremszange eingesetzten Bremsbelag gegen die Widerlagerfläche und die Bremsbelagabstützeinrichtung vorspannt.

Erfindungsgemäß kann die Vorspanneinrichtung derart ausgebildet sein, dass sie auf einen in die Bremszange eingesetzten Bremsbelag eine Kraft ausübt, die im wesentlichen in Richtung der Bremsbelagabstützeinrichtung gerichtet ist. Vorzugsweise kann dazu die Vorspanneinrichtung eine Federeinrichtung umfassen, die an der Oberseite von einem in das Gehäuse eingesetzten Bremsbelag angreift. Vorteilhafterweise kann dabei die Vorspanneinrichtung eine oder mehrere Blattfedern umfassen, die an der Oberseite der in das Gehäuse eingesetzten Bremsbeläge angreifen. Diese Ausführungen der Erfindung haben den Vorteil, dass bei der Montage der Bremsbeläge die Bremsbeläge mit einem Geräusch hinter der Bremsbelagsicherungseinrichtung einschnappen oder einrasten und dem Benutzer ein deutliches Signal über die richtige Positionierung der Bremsbeläge vermitteln.

Vorteilhafterweise kann die Vorspanneinrichtung in Umfangsrichtung einer in dem Gehäuse aufgenommenen Bremsscheibe ungefähr in der Mitte zwischen der Widerlagerfläche und der Bremsbelagsicherungsvorrichtung angeordnet sein.

Vorteilhafterweise kann die Bremsbelagabstützeinrichtung derart ausgebildet sein, dass ein in das Gehäuse eingesetzter Bremsbelag durch die durch die Vorspanneinrichtung auf den Bremsbelag ausgeübte Kraft in Richtung der Widerlagerfläche vorgespannt wird.

Gemäß einer alternativen Ausgestaltung der Erfindung kann die Vorspanneinrichtung derart ausgebildet sein, dass sie auf einen in die Bremszange eingesetzten Bremsbelag eine Kraft ausübt, die im wesentlichen in Richtung der Widerlagerfläche gerichtet ist. Dabei kann die Vorspanneinrichtung eine Federeinrichtung umfassen, die auf der der Widerlagerfläche gegenüberliegenden Seite eines in die Bremszange eingesetzten Bremsbelags an dem Bremsbelag angreift. Vorteilhafterweise kann dabei die Widerlagerfläche derart geneigt sein, dass ein gegen die Widerlagerfläche vorgespannter Bremsbelag gegen die Bremsbelagabstützeinrichtung vorgespannt wird.

Gemäß einer alternativen Ausgestaltung der Erfindung kann die Vorspanneinrichtung derart ausgebildet sein, dass sie auf einen in die Bremszange eingesetzten Bremsbelag eine Kraft ausübt, die eine erste Kraftkomponente, die im wesentlichen in Richtung der Bremsbelagabstützeinrichtung gerichtet ist, und eine zweite Kraftkomponente aufweist, die im wesentlichen in Richtung der Widerlagerfläche gerichtet ist. Dabei kann vorteilhafterweise die erste Kraftkomponente ungefähr das 0,1 bis ungefähr das 10-fache, vorzugsweise ungefähr das 0,5 bis ungefähr das 5-fache und vorzugsweise ungefähr das 2-fache der zweiten Kraftkomponente betragen.

Bei den genannten Ausführungen kann die Vorspanneinrichtung vorteilhafterweise derart ausgebildet sein, dass sie bei Betätigung der Bremse deaktiviert wird. Das hat den Vorteil, dass insbesondere beim ersten Lösen der Bremse, wenn die Bremsbeläge die Bremsscheibe freigeben, die Haftreibung zwischen dem Bremsbelag und der Widerlagerfläche bzw. der Bremsbelagabstützvorrichtung geringer ist und ein Verklemmen der Bremsbeläge vermieden wird. Vorteilhafterweise kann dabei die Bremszange eine hydraulische Bremsbetätigung umfassen, und die Vorspanneinrichtung derart ausgebildet sein, dass sie durch den bei der Betätigung der Bremse aufgebauten hydraulischen Druck, der auch noch unmittelbar nach dem Lösen bzw. vorzugsweise noch für kurze Zeit erzeugt bzw. gespeichert wird, deaktiviert wird.

Erfindungsgemäß kann die Bremsbelagabstützeinrichtung mehrere Bolzen umfassen, die jeweils einen in das Gehäuse eingesetzten Bremsbelag abstützen. Alternativ oder zusätzlich kann die Bremsbelagabstützeinrichtung mehrere Vorsprünge umfassen, die jeweils einen in das Gehäuse eingesetzten Bremsbelag abstützen. Dabei können die Vorsprünge einstückig mit dem Gehäuse ausgebildet sein.

Erfindungsgemäß kann die Bremsbelagabstützeinrichtung in Umfangsrichtung einer in dem Gehäuse aufgenommenen Bremsscheibe ungefähr in der Mitte zwischen der Widerlagerfläche und der Bremsbelagsicherungsvorrichtung angeordnet sein. Erfindungsgemäß können vorzugsweise dabei die Bremsbelagabstützeinrichtung und die Vorspanneinrichtung in Umfangsrichtung einer in dem Gehäuse aufgenommenen Bremsscheibe im wesentlichen ungefähr auf der gleichen Höhe angeordnet sein.

Erfindungsgemäß kann das Gehäuse ein Schmiedeteil sein, das vorzugsweise einteilig ausgebildet ist. Die Ausbildung als Schmiedeteil hat den Vorteil, dass die Bremszange bei gleicher Festigkeit kleiner gebaut werden kann. Das ist insbesondere im Moto-Cross-Bereich wichtig, weil es dann möglich ist, die Bremszange in einem Winkel von ungefähr 15 Grad nach oben anzuordnen und an zwei Anschraubaugen anzuordnen, die die Bremszange in Umfangsrichtung der Bremsscheibe vollständig einschließen. Das hat den Vorteil, dass eine optimale Verwindungssteifigkeit gegeben ist, wobei gleichzeitig keine Störkontur unterhalb des Gabelfusses erzeugt wird.

Alternativ kann das Gehäuse ein Fräs- und/oder Gußteil sein, das einteilig, zweiteilig oder mehrteilig ausgebildet ist.

Alternativ oder zusätzlich kann das Gehäuse eine Aussparung aufweisen, in die ein Vorsprung von einem in das Gehäuse eingesetzten Bremsbelag eingreift.

Alternativ oder zusätzlich kann das Gehäuse zumindest ein Sichtfenster aufweisen, in das ein Vorsprung von einem in das Gehäuse eingesetzten Bremsbelag eingreift, wobei das zumindest eine Sichtfenster vorzugsweise derart ausgebildet ist, dass der Verschleiß der Reibbeläge eines in das Gehäuse eingesetzten Bremsbelags beobachtbar ist.

Im folgenden wird eine erfindungsgemäße Bremszange anhand der in den Figuren gezeigten Ausführungsbeispiele der Erfindung genauer beschrieben.
- Fig. 1: zeigt einen Schnitt durch eine erfindungsgemäße Bremszange entlang der Linie I-I von Fig. 2.
- Fig. 1A: zeigt einen Schnitt durch eine weitere erfindungsgemäße Bremszange entlang der Linie IA-IA von Fig. 2A.
- Fig. 2: zeigt eine Vorderansicht der Bremszange von Fig. 1.
- Fig. 2A: zeigt eine Vorderansicht der Bremszange von Fig. 1A.
- Fig. 3: zeigt einen Schnitt durch die Bremszange von Fig. 1 entlang der Linie III-III von Fig. 1.
- Fig. 4: zeigt eine Hinteransicht der Bremszange von Fig. 1.
- Fig. 5: zeigt eine Seitenansicht der Bremszange von Fig. 1.
- Fig. 6: zeigt eine Ansicht der Bremszange von Fig. 1 von oben.
- Fig. 7: zeigt eine Ansicht der Bremszange von Fig. 1 in Kombination mit einem Gabelfuss von vorne (bezogen auf das Fahrzeug).
- Fig. 8: zeigt eine Ansicht der Kombination von Fig. 7 von Bremszange und Gabelfuss von der Seite.
- Fig. 9: zeigt eine Ansicht der Kombination von Fig. 7 von Bremszange und Gabelfuss von oben (bezogen auf das Fahrzeug).
- Fig. 10: zeigt eine Detailansicht des Bügels und des Bolzens der Bremsbelagsicherungsvorrichtung der Bremszange von Fig. 1 aus einer Richtung entsprechend Fig. 4.
- Fig. 11: zeigt eine Detailansicht des Bügels und des Bolzens der Bremsbelagbefestigungsvorrichtung der Bremszange von Fig. 1 aus einer Richtung entsprechend Fig. 5.
- Fig. 12: zeigt eine Detailansicht des Bügels und des Bolzens einer Bremsbelagbefestigungsvorrichtung gemäß einer erfindungsgemäßen Alternative.
- Fig. 13: zeigt eine Teilansicht des Abstützabschnitts einer erfindungsgemäßen Bremszange und der Unterseite eines erfindungsgemäßen alternativen Bremsbelags.
- Fig. 14: zeigt eine Teilschnittansicht durch einen Bremszylinder mit einem Verschlusselelement der Bremszange von Fig. 1.
- Fig. 15: zeigt einen Schnitt durch das Verschlußelement der Bremszange von Fig. 14,
- Fig. 16: zeigt eine Seitenansicht des Verschlußelements von Fig. 15.

### Folgende Bezugszeichen werden verwendet:

- 10: Verschlusselement
- 11: Aussparung
- 12: Außenwandung
- 13: Nut
- 14: Abschnitt
- 15: Abschnitt
- 21: Sicherungselement
- 22: Dichtung
- 27: Bremskolben
- 29: Montageöffnung (für Bremsbeläge)
- 30: Gehäuse
- 301: Aussparung
- 302: Schulter
- 303: Anschraubauge
- 304: Anschraubauge
- 31: Bremsbelagabstützvorrichtung
- 31A: Bolzen
- 311A: Hauptabschnitt
- 312A: Kopfabschnitt
- 31B: Bolzen
- 32: Vorspanneinrichtung
- 33: Widerlagerfläche
- 34: Bohrung
- 35: Aufweitung
- 36: Bremszylinder
- 37: Nut
- 371: Schulter
- 38: Wartungsöffnung
- 39: Drehrichtung der Bremsscheibe (Vorfährtsfahrt)
- 139: Aussparung
- 139A; 139B: Sichtfenster
- 40; 40': Bremsbelag
- 41: Aussparung (halbrund)
- 41': Aussparung (Abschrägung)
- 141: Aussparung (asymmetrisch)
- 42: Oberseite
- 43: Vorderseite
- 44: Arm
- 45: Aufnahmeöffnung
- 46: Unterseite
- 47: Reibbelag
- 48: Reibbelag
- 49; 49A; 49B: Vorsprung
- 50: Bremsbelagsicherungsvorrichtung
- 51; 51': Sicherungsbolzen
- 511; 511': Nut
- 512: Nut
- 513: Kopfabschnitt
- 514: Hauptabschnitt
- 515: Kopfabschnitt
- 517': Bohrung
- 52; 52': Bügel
- 521; 521': Armabschnitt
- 522; 522': Bogenabschnitt
- 523; 523': Betätigungsabschnitt
- 524: Armabschnitt
- 525: Bogenabschnitt
- 526: Betätigungsabschnitt
- 527': Eingriffabschnitt
- 53: Nocke
- 60: Gabelfuss
- 61: Gabelaufnahme
- 62: Achsaufnahme
- 63: Aufnahme
- 64: Aufnahme

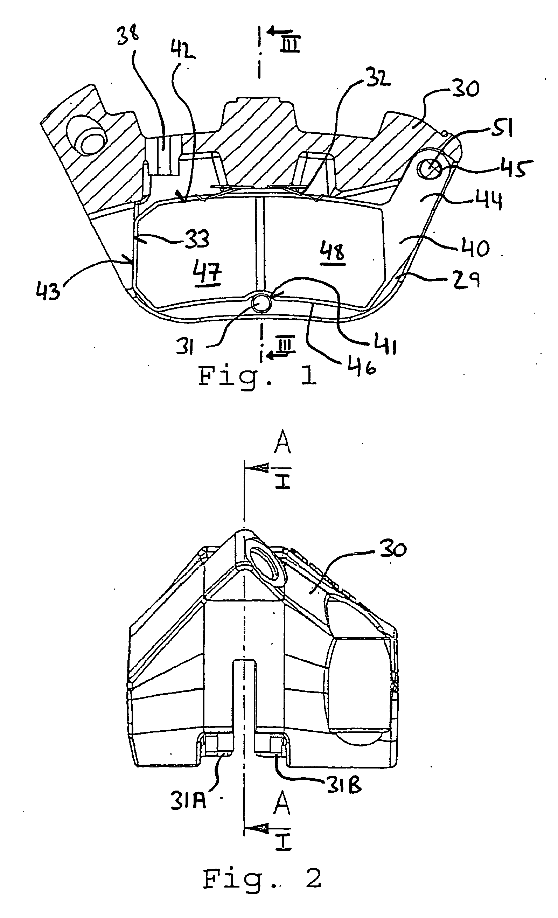

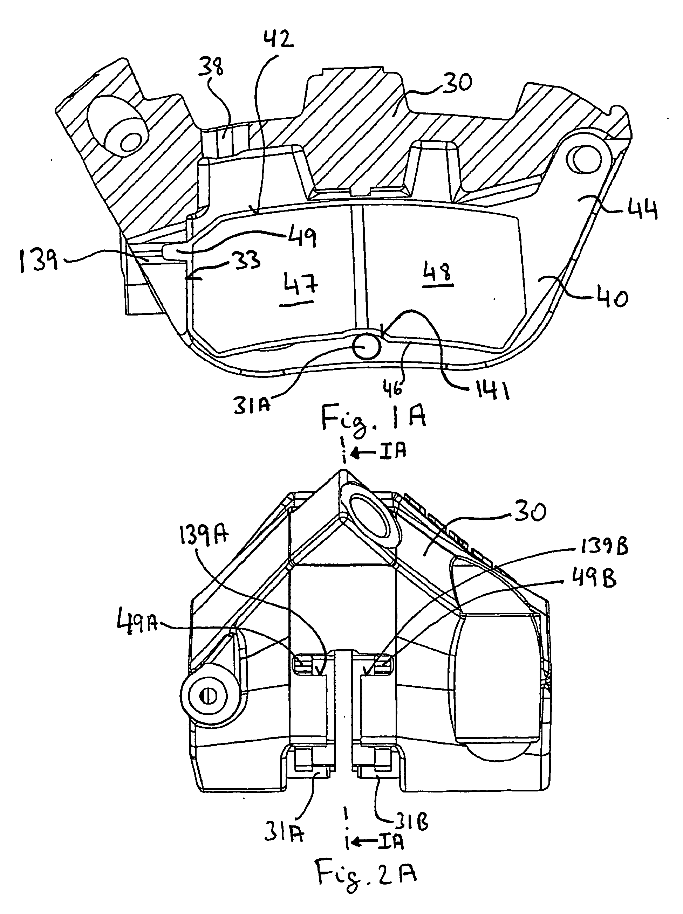

Figur 1 zeigt einen Schnitt durch eine erfindungsgemäße Bremszange entlang der Linie I-I von Figur 2.

Die erfindungsgemäße Bremszange umfaßt ein Gehäuse 30, in dem ein Bremsbelag 40 aufgenommen ist. Das Gehäuse 30 weist auf seiner in Figur 1 linken Seite eine Widerlagerfläche 33 auf, an der sich der Bremsbelag 40 mit seiner Vorderseite 43 abstützt. Die Widerlagerfläche 33 und die Vorderseite 43 des Bremsbelags 40 sind derart ausgebildet, dass eine flächige Anlage des Bremsbelags 40 an der Widerlagerfläche 33 erfolgt.

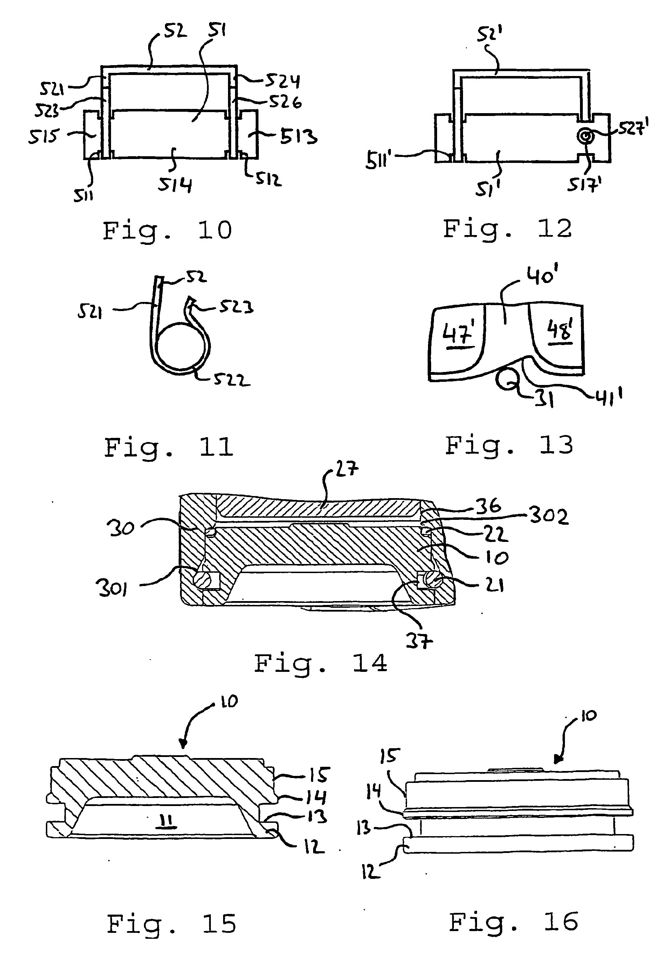

Der Bremsbelag 40 weist einen Arm 44 mit einer Aufnahmeöffnung 45 auf, in der ein Bolzen 51 einer in den Figuren 10 und 11 detailliert dargestellten Bremsbelagsicherungsvorrichtung 50 angeordnet ist und den Bremsbelag 40 in dem Gehäuse 30 sichert. Die Widerlagerfläche 33 ist derart geneigt, dass sich der Bremsbelag 40 um die Aufnahmeöffnung 45 nach unten aus dem Gehäuse 30 drehen könnte. Um den Bremsbelag 40 gegen ein derartiges Herausdrehen zu sichern, ist an dem Gehäuse 30 im unteren Bereich eine Bremsbelagabstützvorrichtung 31 vorgesehen, die den Bremsbelag 40 an seiner Unterseite 46 abstützt. In der Unterseite 46 ist eine Aussparung 41 vorgesehen, in der die Bremsbelagabstützvorrichtung 31 angreift.

Um den Bremsbelag 40 in eine definierte Position in dem Gehäuse 30 vorzuspannen, ist eine Vorspannvorrichtung 32 vorgesehen, die an der Oberseite 42 des Bremsbelags 40 angreift. Die Vorspannvorrichtung 32 drückt den Bremsbelag 40 mit der bogenförmigen Aussparung 41 gegen die Bremsbelagabstützvorrichtung 31. Wegen der bogenförmigen Ausbildung der Aussparung 41 wird der Bremsbelag 40 mit seiner Vorderseite 43 gegen die Widerlagerfläche 33 gedrückt.

Gemäß einer nicht dargestellten alternativen Ausführung der Erfindung könnte die Vorspannvorrichtung auch auf der Widerlagerfläche 33 gegenüberliegenden Seite des Gehäuses 30 vorgesehen werden und den Bremsbelag 40 in Richtung der Widerlagerfläche 33 vorspannen. Durch die schräge Anordnung der Widerlagerfläche 33 wird der Bremsbelag 40 gegen die Bremsbelagabstützvorrichtung 31 vorgespannt.

Gemäß einer weiteren alternativen Vorrichtung kann auch eine Vorspannvorrichtung vorgesehen sein, die den Bremsbelag 40 mit einer Kraftkomponente gegen die Bremsbelagabstützvorrichtung 31 und mit einer weiteren Kraftkomponente gegen die Widerlagerfläche 33 vorspannt.

Der Bolzen 51 ist in der Aufnahmeöffnung 45 des Bremsbelags 40 mit Spiel angeordnet, um einen Ausgleich für die Wärmeausdehnung des Bremsbelags 40 bei den beim Bremsen zum Teil erheblichen Temperaturen zu schaffen. Das Spiel ist insbesondere wichtig, um ein Festsetzen des Bremsbelags beim Bremsen zu vermeiden. Fig. 1 zeigt die erfindungsgemäße Bremszange im kalten Zustand, d.h. das Spiel in der Aufnahmeöffnung 45 ist im wesentlichen links von dem Bolzen 51 ausgebildet. Beim Erwärmen des Bremsbelags 40 dehnt sich der Bremsbelag 40 aus und kann in Fig. 1 nach rechts ausweichen. Dabei verschiebt sich die Aussparung 41 auf der Bremsbelagabstützvorrichtung 31 derart, dass wegen der halbrunden Ausgestaltung der Aussparung 51 der Bremsbelag 40 auch etwas nach oben gegen die Vorspannvorrichtung 32 gedrückt wird. Durch die Vorspannvorrichtung 32 wird der Bremsbelag 40 gleichzeitig infolge der halbrunden Ausgestaltung der Aussparung 41 nach links gegen die Widerlagerfläche 33 gedrückt.

Der Bremsbelag 40 weist zwei Reibbeläge 47, 48 auf, die auf bekannte Weise beim Bremsvorgang gegen eine in dem Gehäuse 30 aufgenommene Bremsscheibe gedrückt werden. Das Gehäuse 30 weist eine Wartungsöffnung 38 auf, um den Verschleiß der Reibbeläge einfacher erkennen zu können bzw. um die Anlagefläche der Reibbeläge sehen und ggf. reinigen zu können.

Die dargestellte Bremszange weist zwei spiegelbildlich aufgebaute Bremsbeläge 40 auf, die beim Bremsen von beiden Seiten auf die in das Gehäuse 30 aufgenommene Bremsscheibe einwirken. Wie in Fig. 2 dargestellt, umfaßt die Bremsbelagabstützvorrichtung 31 zwei gegenüberliegende Bolzen 31A, 31B zur Abstützung jeweils eines Bremsbelags 40.

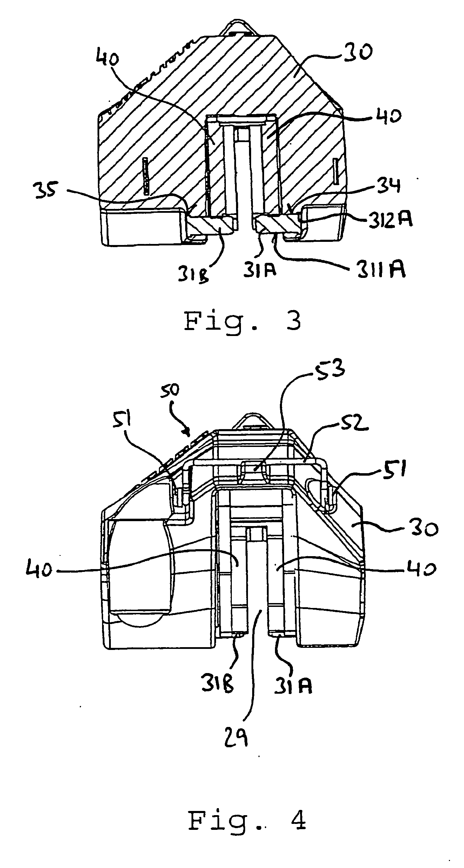

Fig. 3 zeigt einen Schnitt durch die Bremszange von Fig. 1 entlang der Linie III-III von Fig. 1. In Fig. 3 ist die Anordnung der Bolzen 31A, 31B in dem Gehäuse 30 erkennbar. Die Bolzen 31A und 31B sind spiegelbildlich aufgebaut. Der Aufbau wird beispielhaft an dem Bolzen 31A erläutert. Der Bolzen 31A weist einen Hauptabschnitt 311A und einen Kopfabschnitt 312A auf, der einen etwas größeren Durchmesser aufweist. Der Bolzen 31A ist in einer Bohrung 34 aufgenommen, die im Bereich des Kopfabschnitts 312A eine Aufweitung 35 aufweist. Der Bolzen 31A wird in die Bohrung 34 mit der Preßpassung eingesetzt und Material des Gehäuses 30 wird zur Sicherung des Bolzens 31A über den Kopfabschnitt 312A umgeformt.

Zur Montage der Bremsbeläge 40 in das Gehäuse werden die Bremsbeläge 40 in Fig. 1 von rechts in die Bremszange gesteckt. Dabei wird der Bremsbelag 40 durch die Bremsbelagabstützvorrichtung 31 nach oben gegen die Vorspannvorrichtung 32 gedrückt. Sobald der Bremsbelag 40 seine Endlage erreicht hat, wird er durch die Vorspannvorrichtung 32 in die halbrunde Aussparung 41 des Belags 40 gegen die Bremsbelagabstützvorrichtung 31 gedrückt. Es erfolgt ein mit einem Geräusch verbundenes "Einschnappen" oder "Einrasten" des Bremsbelags 40, und damit eine deutliche Rückmeldung an den Benutzer. Danach werden die Beläge 40 durch den Bolzen 51 abgesteckt. Zur Sicherung des Bolzens 51 wird ein Bügel 52 an den Enden des Bolzens 51 vorgesehenen Nuten 511, 512 angeordnet. Der Bügel 52 wird anschließend über die an dem Gehäuse 30 ausgebildete Nocke 53 geschoben und rastet dort ein. Dadurch entsteht eine doppelte Absicherung des Bolzens, die in der Doppelfunktion des Bügels 52 verwirklicht wird.

Fig. 4 zeigt eine Hinteransicht der Bremszange von Fig. 1. Durch die Montageöffnung 29 sind die Bremsbeläge 40 in das Gehäuse 30 eingebracht. Oberhalb der Montageöffnung 29 ist die Nocke 53 der Bremsbelagsicherungsvorrichtung 50 vorgesehen. Die Bremsbelagsicherungsvorrichtung 50 umfaßt den Bolzen 51, der mit dem Bügel 52 gesichert ist und in den Figuren 10 und 11 detailliert beschrieben ist.

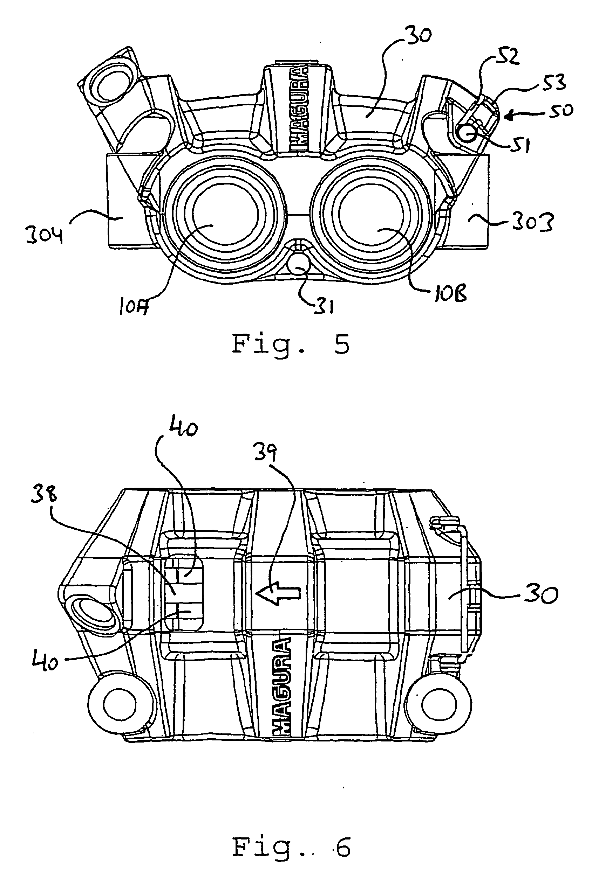

Fig. 5 zeigt eine Seitenansicht der Bremszange von Fig. 1. Die Bremszange umfaßt zwei Bremskolbenpaare, die auf bekannte Weise aufgebaut sind. Die Bremszylinder weisen ein offenes Ende auf, das mit jeweils einem Verschlußelement 10A bzw. 10B verschlossen ist. Die Ausbildung des Verschlußelements ist in den Figuren 14 bis 16 detailliert beschrieben.

Fig. 6 zeigt eine Ansicht der Bremszange von Fig. 1 von oben. Mit dem Pfeil 39 ist die Drehrichtung der Bremsscheibe bei Vorwärtsfahrt angegeben. Durch die Wartungsöffnung 38 ist der Verschleiß der Reibbeläge einfach zu erkennen und können die Anlagefläche der Beläge gesehen und gereinigt werden.

Die Figuren 1A und 2A zeigen eine weitere erfindungsgemäße Bremszange, die im wesentlichen der in den Figuren 1 bis 6 gezeigten Bremszange entspricht. Daher werden im wesentlichen die gleichen Bezugszeichen für gleiche Merkmale verwendet, wird auf die obige Beschreibung verweisen, und es werden im folgenden im wesentlichen nur die Unterschiede beschrieben.

Übersichtshalber wurde die Feder 32 in Fig. 1A nicht dargestellt.

Die Aussparung 141 ist asymmetrisch ausgebildet. Diese Ausbildung hat den Vorteil, dass der Belag leichter ausgetauscht werden kann.

An der linken Seite weist der Belag 40 einen Vorsprung 49 auf, der in eine Aussparung 139 in dem Gehäuse eingreift. Vorzugsweise liegt der Vorsprung 49 bzw. 49A, 49B nicht an dem Gehäuse 30 an, sondern hat zumindest einen geringen Abstand. Der Vorsprung 49 dient als Sicherungselement für den ungewöhnlichen Fall, dass sich infolge einer extremen Belastung oder Ausnahmesituation das Abstützelement 31 (bei dieser Ausführung der einseitig gelagerte Bolzen 31A bzw. der Bolzen 31B) löst. In diesem Fall liegt der Vorsprung 49 bzw. 49A, 49B an dem Gehäuse 30 in der Aussparung 139 an und ein Herunterklappen des Bremsbelags wird sicher verhindert.

Die Aussparung 139 ist bei der gezeigten Ausführung durchgehend ausgebildet, derart, dass das Gehäuse 30 ein Sichtfenster 139A und ein Sichtfenster 139B aufweist, wie in Fig. 2A gezeigt. Die Sichtfenster erfüllen somit bevorzugt die Doppelfunktion, dass sich einerseits die Vorsprünge 49A, 49B der beiden Bremsbeläge 40 beispielsweise bei einem Ausfall zumindest eines Bolzens 31A; 31B an dem Sichtfenster abstützen können, und sich andererseits der Verschleiss der Reibbeläge 47, 48 durch die Sichtfenster verfolgen läßt. Beispielsweise kann, wie in Fig. 2A gezeigt, durch das Sichtfenster sowohl der Vorsprung als auch der Reibbelag sichtbar sein. Alternativ oder zusätzlich kann das Sichtfenster eine Markierung aufweisen, die den maximal zulässigen Verschleiß der Reibbeläge bzw. die verbleibende Stärke der Reibbeläge 47, 48 anzeigt. Dazu kann beispielsweise eine Kante in der Höhe des Trägerblechs vorgesehen werden. Bei dieser Ausführung kann auch auf die Wartungsöffnung 38 verzichtet werden, weil die Sichtfenster die Funktion der Wartungsöffnung 38 erfüllen können.

Zusätzlich oder alternativ zu dem Vorsprung 49 und der Aussparung 139 können gemäß nicht dargestellten Ausführungen der Erfindung entsprechende Sicherungsmittel vorgesehen werden. Beispielsweise kann der Belag in der Mitte eingehängt werden, beispielsweise in der Feder bzw. der Wartungsöffnung. Dazu kann der Belag geeignet ausgebildete Vorsprünge aufweisen. Alternativ oder zusätzlich kann auch ein Bolzen oberhalb bzw. vorzugsweise außerhalb des Bereichs in den die nicht dargestellte Bremsscheibe eingreift vorgesehen sein, an den der Bremsbelag mit einem entsprechend ausgebildeten Vorsprung angreift. Bei dieser Ausführung können die Bolzen 31A und 31B auch weggelassen werden, und der Belag kann gegen den Bolzen gespannt werden. Dieser Bolzen kann beispielsweise auch zur Aufhängung bzw. Befestigung der Feder dienen.

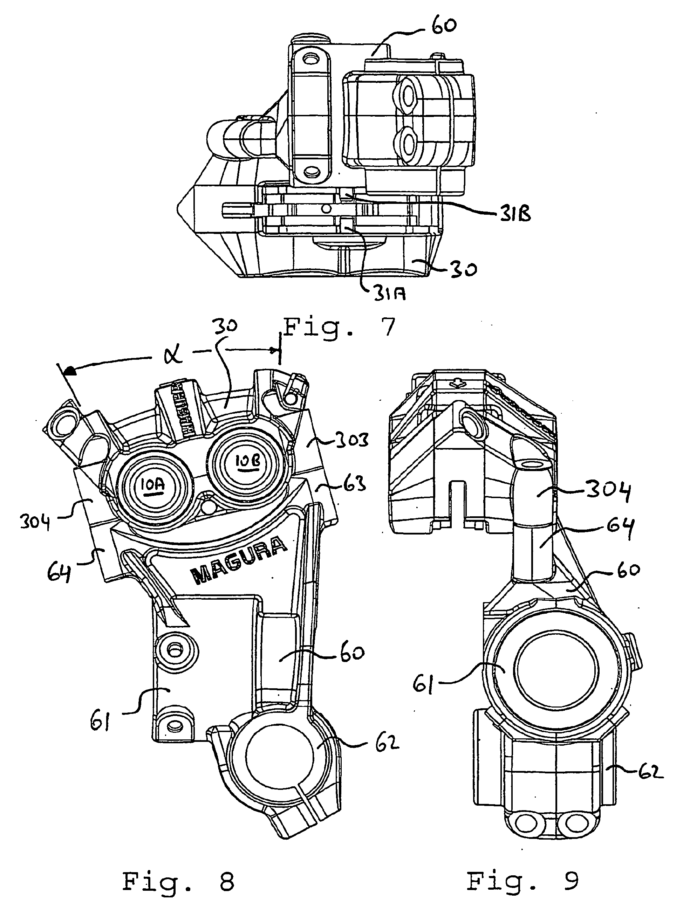

Die Figuren 7 bis 9 zeigen die Bremszange von Fig. 1 in Kombination mit einem Gabelfuß. Fig. 7 zeigt die Kombination von unten, Fig. 8 von der Seite und Fig. 9 von vorne. Der Gabelfuß 60 umfaßt eine Gabelaufnahme 61 und eine Achsaufnahme 62, die auf bekannte Weise ausgebildet sind. Die Bremszange ist mit dem Gabelfuß 60 über zwei Bolzen- und/oder Schraubenverbindungen verbunden, die an der Vorder- und Rückseite des Gehäuses angreifen. Das Gehäuse 30 weist an der Vorderseite ein Anschraubauge 304 und an der Rückseite ein entsprechendes Anschraubauge 303 auf. Der Gabelfuß weist entsprechende Aufnahmen 63 und 64 auf, in denen nicht dargestellte Bolzen oder Gewinde vorgesehen sind, die in die Anschraubaugen 303 bzw. 304 auf bekannte Weise angreifen. Die Anschraubaugen 303 und 304 sind in Umfangsrichtung der Bremsscheibe gesehen an gegenüberliegenden Enden der Bremszange 30 vorgesehen. Da die Anschraubaugen 303 und 304 die in dem Gehäuse der Bremszange vorgesehenen Bremszylinder einschließen, ist eine optimale Verbindungssteifigkeit gegeben.

Die Konstruktion des Gabelfusses 60 ist derart, dass die Bremszange in einem Winkel α = ungefähr 0 bis ungefähr 45°, vorzugsweise α = ungefähr 10 bis ungefähr 30° und insbesondere vorzugsweise α = ungefähr 15° nach oben positioniert werden kann. Die nach oben gerichtete Konstruktion ist notwendig, um auf der Unterseite der Gabel keine Störkontur zu erzeugen, die tiefer als der Gabelfuß ist. Das ist insbesondere bei Moto-Cross-Motorrädern sehr wichtig, bei denen die Bremse ansonsten Kontakt mit Hindernissen am Boden haben könnte.

Fig. 10 zeigt eine Detailansicht des Bügels 52 und des Bolzens 51 der Bremsbelagsicherungsvorrichtung 50 der Bremszange von Fig. 1 aus einer Richtung entsprechend Fig. 4. Der Bolzen 51 umfaßt einen Hauptabschnitt 514 und zwei Kopfabschnitte 515 bzw. 513, die durch jeweils eine Nut 511 bzw. 512 von dem Hauptabschnitt 514 getrennt sind. Der Bügel 52 umfaßt an seinen Seiten jeweils einen Armabschnitt 521 bzw. 524, die ähnlich wie ein Federsplint ausgebildet sind. Die Armabschnitte 521 bzw. 524 umfassen jeweils einen Bogenabschnitt 522 bzw. 525, der in einen Betätigungsabschnitt 523 bzw. 526 übergeht.

Zur Sicherung der Bremsbeläge in dem Gehäuse wird der Bolzen 51 in das Gehäuse 30 durch die Aufnahmeöffnungen 45 der Bremsbeläge 40 eingesteckt und mit dem Bügel 52 gesichert (siehe Figuren 1 und 4). Dazu werden die Armabschnitte 521 bzw. 524 in die Nuten 511, 512 eingerastet und der Bügel 52 über die Nocke 53 gedreht.

Fig. 12 zeigt eine alternative Ausbildung der Bremsbelagsicherungsvorrichtung 50. Der Bügel 52' ist auf seiner in Fig. 12 linken Seite entsprechend der Figuren 10 und 11 ausgebildet, auf deren Beschreibung verwiesen wird. Auf seiner in Fig. 12 rechten Seite weist der Bügel 52 einen Eingriffsabschnitt 527 auf, der in eine Bohrung 517 in dem Bolzen 51' eingehängt wird. Zur Montage des Sicherungsbügels 52' wird der Bügel 52' mit dem Eingriffabschnitt 527 in die Bohrung 517 eingehängt und über der Nocke 53 angeordnet. Anschließend wird der Armabschnitt 521' in die Nut 511' eingerastet.

Fig. 13 zeigt eine Alternative eines erfindungsgemäßen Bremsbelags 40'. Der Bremsbelag 40' ist im wesentlichen wie der in Fig. 1 gezeigte Bremsbelag 40 ausgebildet, auf dessen Beschreibung verwiesen wird. Im Folgenden werden nur die Unterschiede beschrieben.

Der Bremsbelag 40' weist eine anders ausgebildete Aussparung 41' auf. Die Aussparung 41' weist eine Abschrägung auf, die derart geneigt ist, dass der Bremsbelag 40' durch die Vorspannvorrichtung in Richtung der Widerlagerfläche 33 vorgespannt wird. Der Winkel der Abschrägung der Aussparung 41' sollte nicht zu steil gewählt werden, um zu vermeiden, dass der Belag klemmt. Er sollte auch nicht zu flach gewählt werden, um eine hohe Reibkraft zu vermeiden, so dass keine Vorspannung folgt. Es liegt im Können des Fachmanns, die geeignete Neigung zu bestimmen. Die Aussparung 41' kann krummlinig oder gradlinig verlaufen. Es wird derzeit angenommen, dass ein Winkel in dem Bereich von 30 bis 45° am besten geeignet ist. Anhand von Versuchen wird herausfindbar sein, ob größere oder kleinere Winkel ebenfalls geeignet sind.

Die Figuren 14 bis 16 zeigen den Aufbau des Verschlusselements für die offenen Enden der Bremszylinder.

Fig. 14 zeigt einen Teilquerschnitt durch ein Gehäuse einer erfindungsgemäßen Bremszange durch einen Bremszylinder. Das Gehäuse 30 weist zwei Bremszylinder 36 auf, in denen jeweils ein Bremskolben 27 angeordnet ist (nur einer ist jeweils dargestellt). Die Bremskolben 27 sind auf gegenüberliegenden Seiten der Bremsscheibe angeordnet und werden auf bekannte Weise mit Druck beim Bremsen beaufschlagt, um die Bremsbeläge gegen die Bremsscheibe zu drücken. In den Zylinderwandungen sind Nuten vorgesehen, in denen Vierkantdichtungen aufgenommen sind, die den Bremszylinder 36 abdichten und eine Rückstellung der Bremskolben nach dem Bremsen auf bekannte Weise bewirken.

Das Gehäuse der Bremszange ist vorzugsweise ein Schmiedeteil. Die Bremszylinder 35 und 36 werden durch spanende Bearbeitung ausgebildet. Dabei bleibt ein Zylinder in Folge der spanenden Bearbeitung nach außen offen. Nach dem Einsetzen der Bremskolben wird der Bremszylinder durch das Verschlußelement 10, 10A, 10B verschlossen. Das Verschlußelement 10 weist eine Nut 13 auf, in der ein Sicherungselement 21 angeordnet ist. Das Gehäuse 30 weist eine Aussparung 301 auf, in die das Sicherungselement 21 zum Teil eingreift. Das Sicherungelement 21 sichert das Verschlußelement 10 in dem Gehäuse 30, insbesondere beim Bremsen, wenn in dem Zylinder 35 ein Druck durch das Bremsfluid aufgebaut wird, der das Verschlußelement 10 in Fig. 14 nach unten drückt. In dem Gehäuse 30 ist desweiteren eine Schulter 302 ausgebildet, an der sich das Verschlußelement 10 über eine Dichtung 22 abstützt. Die Dichtung 22 dichtet den Druckraum des Bremszylinders 36 nach außen ab.

Fig. 15 zeigt eine Schnittansicht entsprechend Fig. 14 von dem Verschlußelement 10. Das Verschlußelement 10 weist eine Aussparung 11 an seiner Außenseite auf. Die Aussparung dient zur Gewichtsreduzierung und kann alternativ auch anders ausgebildet werden oder weggelassen werden. Gegenüber bekannten Verschlußelementen hat sie den Vorteil, dass sie optisch gefälliger aussieht und keine Verletzungsgefahr wegen der nicht notwendigen Eingriffsabschnitte für Montagewerkzeuge aufweist. Das Verschlußelement 10 weist eine Nut 13 zur Aufnahme des Sicherungselements 21 auf, die zwischen einer Außenwandung 12 und einem Abschnitt 14 ausgebildet ist. Der Außendurchmesser der Außenwandung 12 entspricht dem Innendurchmesser der Öffnung in dem Gehäuse 30, in die das Verschlußelement 10 eingesetzt wird. Daher ist es nicht möglich, von außen das Verschlußelement 10 zu entfernen, weil das Sicherungselement 21 von außen nicht zugänglich ist. Der Abschnitt 14 entspricht dem Außendurchmesser im wesentlichen dem Außendurchmesser der Außenwandung 12. Der Außendurchmesser des Abschnitts 15 ist geringfügig kleiner als der Außendurchmesser des Abschnitts 14.

Der Außendurchmesser des Abschnitts 15 entspricht im wesentlichen dem Innendurchmesser der Öffnung in dem Gehäuse 30, an dem das Verschlußelement 10 nach der Montage anliegt. Daher ist es nach der Montage des Verschlußelements 10 auch nicht möglich, das Sicherungselement 21 von innen zu betätigen. Somit kann das Verschlußelement 10 nach erfolgter Montage nicht aus der Bremszange entfernt werden. Da die Kolben 25 und 26 auf eine Betriebsdauer ausgelegt ist, die wesentlich größer als die Betriebsdauer des Fahrzeugs ist, besteht auch kein Bedarf, das Verschlußelement 10 nach erfolgter Montage wieder zu entfernen. Das Verschlußelement 10 weist des weiteren eine Aussparung 16 zur Aufnahme des Dichtungselements 22 auf.

Fig. 16 zeigt eine Seitenansicht des Verschlußelements 10 von Fig. 14. Die Beschreibung von Fig. 16 entspricht im wesentlichen der von Fig. 15 und wird hier nicht wiederholt.

Zur Montage des Verschlußelements 10 wird das Verschlußelement 10 zusammen mit dem Sprengring 21 über eine Trichtervorrichtung in eine Hülse eingebracht, deren Innendurchmesser dem Innendurchmesser der Montageöffnung für die Bremskolben entspricht. Die Hülse wird auf das Gehäuse 30 gesetzt und das Verschlußelement 10 wird mit dem Sicherungselement 21 in die Montageöffnung für die Bremskolben geschoben, bis das Verschlußelement 10 gegen die Dichtung 22 stößt. Gleichzeitig gelangt das Sicherungselement 21 in dem Bereich der Aussparung 301. Das Sicherungselement 21 ist ein Sprengring, der vorgespannt ist und in die Aussparung 301 hineinspringt. Die Hälfte des Sicherungselements 21 ist in der Aussparung 301 und die andere Hälfte in der Nut 13 des Sicherungsverschlußelements 10 angeordnet. Durch das Sicherungselement 21 ist das Verschlußelement 10 in der Montageöffnung 50 gesichert.

## Patentansprüche

1. Bremszange für eine Scheibenbremse, insbesondere für Motorräder und/oder Fahrräder, mit
zumindest zwei Bremsbelägen (40),
einem Gehäuse (30) zur Aufnahme der Bremsbeläge (40), die beim Bremsen an eine Bremsscheibe angreifen, wobei das Gehäuse eine Widerlagerfläche (33) zur Anlage der Bremsbeläge beim Bremsen in Vorwärtsfahrtrichtung und eine der Widerlagerfläche (33) gegenüberliegende Montageöffnung (29) aufweist, durch die die Bremsbeläge (40) in das Gehäuse (30) einsetzbar sind,
einer Bremsbelagsicherungsvorrichtung (50) zur Sicherung der Bremsbeläge in dem Gehäuse (30) an der der Widerlagerfläche (33) gegenüberliegenden Seite,
einer Bremsbelagabstützeinrichtung (31) zur Abstützung der Bremsbeläge (40) zwischen der Widerlagerfläche (33) und der Bremsbelagsicherungsvorrichtung (50), und
einer vorspanneinrichtung (32), die derart ausgebildet ist, dass sie die in das Gehäuse (30) eingesetzten Bremsbeläge (40) in eine definierte Position vorspannt,
**dadurch gekennzeichnet, dass** die Bremsbeläge (40) eine Aussparung (41; 41') zur Abstützung an der Bremsbelagabstützvorrichtung (31) aufweisen.

2. Bremszange nach Anspruch 1, **dadurch gekennzeichnet, dass** die Vorspanneinrichtung (32) derart ausgebildet ist, dass sie die in die Bremszange eingesetzten Bremsbeläge (40) gegen die Widerlagerfläche (33) und/oder die Bremsbelagabstützeinrichtung (31) vorspannt.

3. Bremszange nach einem der vorhergehenden Ansprüche, **dadurch gekennzeichnet, dass** die Vorspanneinrichtung (32) derart ausgebildet ist, dass sie auf die in die Bremszange eingesetzten Bremsbeläge (40) eine Kraft ausübt, die im wesentlichen in Richtung der Bremsbelagabstützeinrichtung (31) gerichtet ist.

4. Bremszange nach einem der vorhergehenden Ansprüche, **dadurch gekennzeichnet, dass** die Vorspanneinrichtung (32) mindestens eine Federeinrichtung umfasst, die an der Oberseite (42) von den in das Gehäuse (30) eingesetzten Bremsbelägen (40) angreift.

5. Bremszange nach einem der vorhergehenden Ansprüche, **dadurch gekennzeichnet, dass** die Vorspanneinrichtung (32) eine Blattfeder umfasst, die an der Oberseite (42) von den in das Gehäuse (30) eingesetzten Bremsbelägen (40) angreift.

6. Bremszange nach einem der vorhergehenden Ansprüche, **dadurch gekennzeichnet, dass** die Vorspanneinrichtung (32) mehrere Blattfedern umfasst, die jeweils an einen in das Gehäuse (30) eingesetzten Bremsbelag (40) angreifen.

7. Bremszange nach einem der vorhergehenden Ansprüche, **dadurch gekennzeichnet, dass** die Vorspanneinrichtung (32) in Umfangsrichtung einer in dem Gehäuse aufgenommenen Bremsscheibe ungefähr in der Mitte zwischen der Widerlagerfläche (33) und der Bremsbelagsicherungsvorrichtung (50) angeordnet ist.

8. Bremszange nach einem der vorhergehenden Ansprüche, **dadurch gekennzeichnet, dass** die Bremsbelagabstützeinrichtung (31) derart ausgebildet ist, dass ein in das Gehäuse eingesetzter Bremsbelag (40) durch die durch die Vorspanneinrichtung (32) auf den Bremsbelag (40) ausgeübte Kraft in Richtung der Widerlagerfläche (33) vorgespannt wird.

9. Bremszange nach Anspruch 1 oder 2, **dadurch gekennzeichnet, dass** die Vorspanneinrichtung derart ausgebildet ist, dass sie auf einen in die Bremszange eingesetzten Bremsbelag eine Kraft ausübt, die im wesentlichen in Richtung der Widerlagerfläche gerichtet ist.

10. Bremszange nach Anspruch 9, **dadurch gekennzeichnet, dass** die Vorspanneinrichtung mindestens eine Federeinrichtung umfasst, die auf der der Widerlagerfläche gegenüberliegenden Seite eines in die Bremszange eingesetzten Bremsbelags an dem Bremsbelag angreift.

11. Bremszange nach Anspruch 9 oder 10, **dadurch gekennzeichnet, dass** die Widerlagerfläche derart geneigt ist, dass ein gegen die Widerlagerfläche vorgespannter Bremsbelag gegen die Bremsbelagabstützeinrichtung vorgespannt wird.

12. Bremszange nach Anspruch 1 oder 2, **dadurch gekennzeichnet, dass** die Vorspanneinrichtung derart ausgebildet ist, dass sie auf einen in die Bremszange eingesetzten Bremsbelag eine Kraft ausübt, die eine erste Kraftkomponente, die im wesentlichen in Richtung der Bremsbelagabstützeinrichtung gerichtet ist, und eine zweite Kraftkomponente aufweist, die im wesentlichen in Richtung der Widerlagerfläche gerichtet ist.

13. Bremszange nach Anspruch 12, **dadurch gekennzeichnet, dass** die erste Kraftkomponente ungefähr das 0,1 bis ungefähr das 10-fache, vorzugsweise ungefähr das 0,5 bis ungefähr das 5-fache und vorzugsweise ungefähr das 2-fache der zweiten Kraftkomponente beträgt.

14. Bremszange nach einem der vorhergehenden Ansprüche, **dadurch gekennzeichnet, dass** die Vorspanneinrichtung derart ausgebildet ist, dass sie bei Betätigung der Bremse deaktiviert wird.

15. Bremszange nach Anspruch 14, **dadurch gekennzeichnet, dass** die Bremszange eine hydraulische Bremsbetätigung umfasst, und die Vorspanneinrichtung derart ausgebildet ist, dass sie durch den bei der Betätigung der Bremse aufgebauten hydraulischen Druck deaktiviert wird.

16. Bremszange nach einem der vorhergehenden Ansprüche, **dadurch gekennzeichnet, dass** die Bremsbelagabstützeinrichtung (31) mehrere Bolzen (31A, 31B) umfasst, die jeweils einen in das Gehäuse (30) eingesetzten Bremsbelag (40) abstützen.

17. Bremszange nach einem der vorhergehenden Ansprüche, **dadurch gekennzeichnet, dass** die Bremsbelagabstützeinrichtung mehrere Vorsprünge umfasst, die jeweils einen in das Gehäuse eingesetzten Bremsbelag abstützen.

18. Bremszange nach Anspruch 17, **dadurch gekennzeichnet, dass** die Vorsprünge einstückig mit dem Gehäuse ausgebildet sind.

19. Bremszange nach einem der vorhergehenden Ansprüche, **dadurch gekennzeichnet, dass** die Bremsbelagabstützeinrichtung (31) in Umfangsrichtung einer in dem Gehäuse aufgenommenen Bremsscheibe ungefähr in der Mitte zwischen der Widerlagerfläche (33) und der Bremsbelagsicherungsvorrichtung (50) angeordnet ist.

20. Bremszange nach einem der vorhergehenden Ansprüche, **dadurch gekennzeichnet, dass** die Bremsbelagabstützeinrichtung (31) und die Vorspanneinrichtung (32) in Umfangsrichtung einer in dem Gehäuse aufgenommenen Bremsscheibe im wesentlichen ungefähr auf der gleichen Höhe angeordnet sind.

21. Bremszange nach einem der vorhergehenden Ansprüche, **dadurch gekennzeichnet, dass** das Gehäuse (30) ein Schmiedeteil ist, das vorzugweise einteilig ausgebildet ist.

22. Bremszange nach einem der vorhergehenden Ansprüche, **dadurch gekennzeichnet, dass** das Gehäuse ein Fräs- und/oder Gussteil ist, das einteilig, zweiteilig oder mehrteilig ausgebildet ist.

23. Bremszange nach einem der vorhergehenden Ansprüche, **dadurch gekennzeichnet, dass** das Gehäuse (30) eine Aussparung (139) aufweist, in die ein Vorsprung (49, 49A, 49B) von einem in das Gehäuse (30) eingesetzten Bremsbelag (40) eingreift.

24. Bremszange nach einem der vorhergehenden Ansprüche, **dadurch gekennzeichnet, dass** das Gehäuse (30) zumindest ein Sichtfenster (139A, 139B) aufweist, in das ein Vorsprung (49, 49A, 49B) von einem in das Gehäuse (30) eingesetzten Bremsbelag (40) eingreift, wobei das zumindest eine Sichtfenster vorzugsweise derart ausgebildet ist, dass der Verschleiß der Reibbeläge (47, 48) eines in das Gehäuse (30) eingesetzten Bremsbelags (40) beobachtbar ist.

25. Bremszange nach einem der vorhergehenden Ansprüche, **dadurch gekennzeichnet, dass** die Aussparungen (41) in den Bremsbelägen (40) derart ausgebildet sind, dass die in das Gehäuse (30) eingesetzten Bremsbeläge (40) mittels der durch mindestens eine Vorspanneinrichtung (32) auf die Bremsbeläge (40) ausgeübten Kräfte in Richtung der Widerlagerfläche (33) vorgespannt werden.

26. Bremszange nach einem der vorhergehenden Ansprüche, **dadurch gekennzeichnet, dass** die Aussparungen (41) in den Bremsbelägen (40) halbrundförmig ausgebildet sind.

27. Bremszange nach einem der Ansprüche 1 bis 25, **dadurch gekennzeichnet, dass** die Aussparungen (41') in den Bremsbelägen (40') Abschrägungen aufweisen, die derart ausgebildet sind, dass die in das Gehäuse (30) eingesetzten Bremsbeläge (40') mittels der durch die mindestens eine Vorspanneinrichtung (32) auf die Bremsbeläge (40') ausgeübten Kräfte in Richtung der Widerlagerfläche (33) vorgespannt werden.

28. Bremszange nach Anspruch 27, **dadurch gekennzeichnet, dass** die Abschrägungen geradlinig ausgebildet sind und einen Winkel von ungefähr 15 bis ungefähr 45 Grad, vorzugsweise ungefähr 30 Grad zur Umfangsrichtung der Bremsscheibe aufweisen.

29. Bremszange nach Anspruch 27, **dadurch gekennzeichnet, dass** die Abschrägungen krummlinig ausgebildet sind und eine Neigung in einem Winkelbereich zwischen ungefähr 15 bis ungefähr 45 Grad, vorzugsweise bei ungefähr 30 Grad zur Umfangsrichtung der Bremsscheibe aufweisen.

30. Bremszange nach einem der vorhergehenden Ansprüche, **dadurch gekennzeichnet, dass** die Bremsbeläge einen Vorsprung zum Eingriff in die Aussparung (139) in dem Gehäuse der Bremszange aufweisen.

31. Bremszange nach Anspruch 30, **dadurch gekennzeichnet, dass** die Vorsprünge (49) an einer Seite der Bremsbeläge (40) angeordnet sind.

32. Bremszange nach Anspruch 30, **dadurch gekennzeichnet, dass** die Vorsprünge (49) im wesentlichen mittig vorzugsweise im oberen Bereich der Bremsbeläge angeordnet sind.

## Claims

1. Brake calliper for a disc brake, in particular for motor cycles and/or bicycles, comprising
at least two brake linings (40)
a housing (30) for accommodating the brake linings (40) which grip a brake disc during braking, the housing having an abutment area (33) for contact with the brake linings during braking in the forward direction of travel and an assembly opening (29) which is opposite the abutment area (33) and through which the brake linings (40) can be inserted into the housing (30),
a brake lining securing device (50) for securing the brake linings in the housing (30) on the side opposite the abutment area (33),
a brake lining support device (31) for supporting the brake linings (40) between the abutment area (33) and the brake lining securing device (50), and
a prestressing device (32) which is formed so that it prestresses the brake linings (40) inserted into the housing (30) in a defined position,
**characterised in that** the brake linings (40) have a recess (41; 41') for support on the brake lining support device (31).

2. Brake calliper according to claim 1, **characterized in that** the prestressing device (32) is formed so that it prestresses the brake linings (40) inserted into the brake calliper against the abutment area (33) and/or the brake lining support device (31).

3. Brake calliper according to any of the preceding claims, **characterized in that** the prestressing device (32) is formed so that it exerts, on the brake linings (40) inserted into the brake calliper, a force which is substantially in the direction of the brake lining support device (31).

4. Brake calliper according to any of the preceding claims, **characterized in that** the prestressing device (32) comprises at least one spring device which grips the top (42) of the brake linings (40) inserted into the housing (30).

5. Brake calliper according to any of the preceding claims, **characterized in that** the prestressing device (32) comprises a leaf spring which grips the top (42) of the brake linings inserted into the housing (30).

6. Brake calliper according to any of the preceding claims, **characterized in that** the prestressing device (32) comprises a plurality of leaf springs which in each case grip a brake lining (40) inserted into the housing (30).

7. Brake calliper according to any of the preceding claims, **characterized in that** the prestressing device (32) is arranged in the circumferential direction of a brake disc accommodated in the housing, approximately in the middle between the abutment area (33) and the brake lining securing device (50).

8. Brake calliper according to any of the preceding claims, **characterized in that** the brake lining support device (31) is formed so that a brake lining (40) inserted into the housing is prestressed in the direction of the abutment area (33) by the force exerted by the prestressing device (32) on the brake lining (40).

9. Brake calliper according to claim 1 or 2, **characterized in that** the prestressing device is formed so that it exerts, on a brake lining inserted into the brake calliper, a force which is substantially pointing in the direction of the abutment area.

10. Brake calliper according to claim 9, **characterized in that** the prestressing device comprises at least one spring device which engages the brake lining on that side of a brake lining inserted into the brake calliper which is opposite the abutment area.

11. Brake calliper according to claim 9 or 10, **characterized in that** the abutment area is inclined so that a brake lining prestressed against the abutment area is prestressed against
the brake lining support device.

12. Brake calliper according to claim 1 or 2, **characterized in that** the prestressing device is formed so that it exerts, on a brake lining inserted into the brake calliper, a force which has a first force component which is substantially in the direction of the brake lining support device and a second force component which is substantially pointing in the direction of the abutment area.

13. Brake calliper according to claim 12, **characterized in that** the first force component is about 0.1 to about 10 times, preferably about 0.5 to about 5 times and preferably about twice the second force component.

14. Brake calliper according to any of the preceding claims, **characterized in that** the prestressing device is formed so that it is deactivated on actuation of the brake.

15. Brake calliper according to claim 14, **characterized in that** the brake calliper comprises a hydraulic brake actuation means, and the prestressing device is formed so that it is deactivated by the hydraulic pressure built up during actuation of the brakes.

16. Brake calliper according to any of the preceding claims, **characterized in that** the brake lining support device (31) comprises a plurality of bolts (31A, 31B) which in each case support a brake lining (40) inserted into the housing (30).

17. Brake calliper according to any of the preceding claims, **characterized in that** the brake lining support device comprises a plurality of projections which in each case support a brake lining inserted into the housing.

18. Brake calliper according to claim 17, **characterized in that** the projections are formed integrally with the housing.

19. Brake calliper according to any of the preceding claims, **characterized in that** the brake lining support device (31) is arranged in the circumferential direction of a brake disc accommodated in the housing, approximately in the middle between the abutment area (33) and the brake lining securing device (50).

20. Brake calliper according to any of the preceding claims, **characterized in that** the brake lining support device (31) and the prestressing device (32) are arranged in the circumferential direction of a brake disc accommodated in the housing, substantially approximately at the same height.

21. Brake calliper according to any of the preceding claims, **characterized in that** the housing (30) is a forged part which is preferably in the form of a single part.

22. Brake calliper according to any of the preceding claims, **characterized in that** the housing is a milled and/or cast part which is formed as a single part, as two parts or as a plurality of parts.

23. Brake calliper according to any of the preceding claims, **characterized in that** the housing (30) has a recess (139) which is engaged by a projection (49, 49A, 49B) of a brake lining (40) inserted into the housing (30).

24. Brake calliper according to any of the preceding claims, **characterized in that** the housing (30) has at least one inspection window (139A, 139B) which is engaged by a projection (49, 49A, 49B) of a brake lining (40) inserted into the housing (30), the at least one inspection window preferably being formed so that the wear of the friction linings (47, 48) of a brake lining (40) inserted into the housing (30) is observable.

25. Brake calliper according to any of the preceding claims, **characterized in that** the recesses (41) in the brake linings (40) are formed so that the brake linings (40) inserted into the housing (30) are prestressed in the direction of the abutment area (33) by means of the forces exerted by at least one prestressing device (32) on the brake linings (40).

26. Brake calliper according to any of the preceding claims, **characterized in that** the recesses (41) in the brake linings are semi-circular.

27. Brake calliper according to any of claims 1 to 25, **characterized in that** the recesses (41') in the brake linings (40') have bevels which are formed so that the brake linings (40') inserted into the housing (30) are prestressed in the direction of the abutment area (33) by means of the forces exerted by the at least one prestressing device (32) on the brake linings (40').

28. Brake calliper according to claim 27, **characterized in that** the bevels are linear and have an angle of about 15 to about 45 degrees, preferably about 30 degrees, to the circumferential direction of the brake disc.

29. Brake calliper according to claim 27, **characterized in that** the bevels are curvilinear and have an inclination in an angle range between about 15 and about 45 degrees preferably about 30 degrees, to the circumferential direction of the brake disc.

30. Brake calliper according to any of the preceding claims, **characterized in that** the brake linings have a projection for engaging a recess (139) in the housing of a brake calliper.

31. Brake calliper according to Claim 30, **characterized in that** the projections (49) are arranged on one side of the brake linings.

32. Brake calliper according to Claim 30, **characterized in that** the projections (49) are arranged substantially centrally, preferably in the upper region of the brake linings.

## Revendications

1. Étrier de frein pour un frein à disque, en particulier pour motocyclettes et/ou bicyclettes, comprenant :
au moins deux garnitures de freins (40),
un boîtier (30) pour la réception des garnitures de freins (40), lesquelles s'appliquent contre un disque de frein lors du freinage et le boîtier comporte une surface de contrebutée (33) pour la venue en appui des garnitures de freins lors du freinage en direction de circulation en marche avant et une ouverture de montage (29) à l'opposé de la surface de contrebutée (33), à travers laquelle les garnitures de freins (40) peuvent être mises en place dans le boîtier (30),
un dispositif de fixation de garniture (50) pour la fixation des garnitures de freins dans le boîtier (30) sur le côté opposé à la surface de contrebutée (33),
un moyen de soutien de garniture (31) pour soutenir les garnitures de freins (40) entre la surface de contrebutée (33) et le dispositif de fixation de garniture (50), et
un dispositif de précontrainte (32), réalisé de telle manière qu'il précontraint les garnitures de freins (40) mises en place dans le boîtier (30) jusqu'à une position définie,
**caractérisé en ce que** les garnitures de freins (40) comportent un évidement (41 ; 41') pour le soutien contre le moyen de soutien de garniture (31).

2. Étrier de frein selon la revendication 1,
**caractérisé en ce que** le dispositif de précontrainte (32) est réalisé de telle manière qu'il précontraint les garnitures de freins (40) mises en place dans l'étrier de frein contre la surface de contrebutée (33) et/ou contre le moyen de soutien de garniture (31).

3. Étrier de frein selon l'une des revendications précédentes,
**caractérisé en ce que** le dispositif de précontrainte (32) et réalisé de telle manière qu'il exerce, sur les garnitures de freins (40) mises en place dans l'étrier de frein, une force qui est orientée sensiblement en direction du moyen de soutien de garniture (31).

4. Étrier de frein selon l'une des revendications précédentes,
**caractérisé en ce que** le dispositif de précontrainte (32) comprend au moins un système à ressort qui attaque la face supérieure (42) de garnitures de freins (40) mises en place dans le boîtier (30).

5. Étrier de frein selon l'une des revendications précédentes,
**caractérisé en ce que** le dispositif de précontrainte (32) comprend un ressort à lame qui attaque la face supérieure (42) de garnitures de freins (40) mises en place dans le boîtier (30).

6. Étrier de frein selon l'une des revendications précédentes,
**caractérisé en ce que** le dispositif de précontrainte (32) comprend plusieurs ressorts à lame, qui attaquent chacun une garniture de frein (40) mise en place dans le boîtier (30).

7. Étrier de frein selon l'une des revendications précédentes,
**caractérisé en ce que** le dispositif de précontrainte (32) est agencé, en direction périphérique d'un disque de frein reçu dans le boîtier, approximativement au milieu entre la surface de contrebutée (33) et le dispositif de fixation de garniture (50).

8. Étrier de frein selon l'une des revendications précédentes,
**caractérisé en ce que** le moyen de soutien de garniture (31) est réalisé de telle façon qu'une garniture de frein (40) mise en place dans le boîtier est précontrainte en direction de la surface de contrebutée (33) par la force exercée sur la garniture de frein (40) par le dispositif de précontrainte (32).

9. Étrier de frein selon la revendication 1 ou 2,
**caractérisé en ce que** le dispositif de précontrainte est réalisé de telle manière qu'il exerce, sur une garniture de frein mise en place dans l'étrier de frein, une force qui est orientée essentiellement en direction de la surface de contrebutée.

10. Étrier de frein selon la revendication 9,
**caractérisé en ce que** le dispositif de précontrainte comprend au moins un système à ressort qui attaque une garniture de frein mise en place dans l'étrier de frein sur la face de cette garniture opposée à la surface de contrebutée.

11. Étrier de frein selon la revendication 9 ou 10,
**caractérisé en ce que** la surface de contrebutée est inclinée de telle façon qu'une garniture de frein précontrainte contre la surface de contrebutée est précontrainte contre le moyen de soutien de garniture.

12. Étrier de frein selon la revendication 1 ou 2,
**caractérisé en ce que** le dispositif de précontrainte est réalisé de telle façon qu'il exerce sur une garniture de frein mise en place dans l'étrier de frein une force qui comprend une première composante de force orientée essentiellement en direction du moyen de soutien de garniture et une seconde composante de force orientée essentiellement en direction de la surface de contrebutée.

13. Étrier de frein selon la revendication 12,
**caractérisé en ce que** la première composante de force est environ de 0,1 fois à environ 10 fois, de préférence environ 0,5 fois à environ 5 fois, et de préférence environ 2 fois la seconde composante de force.

14. Étrier de frein selon l'une des revendications précédentes,
**caractérisé en ce que** le dispositif de précontraint est réalisé de telle façon qu'il est désactivé lors de l'actionnement du frein.

15. Étrier de frein selon la revendication 14,
**caractérisé en ce que** l'étrier de frein comprend un moyen d'actionnement hydraulique, et le dispositif de précontrainte est réalisé de telle façon qu'il est désactivé par la pression hydraulique établie lors de l'actionnement du frein.

16. Étrier de frein selon l'une des revendications précédentes,
**caractérisé en ce que** le moyen de soutien de garniture (31) comprend plusieurs goujons (31A, 31B), qui soutiennent respectivement les garnitures de freins (40) mises en place dans le boîtier (30).

17. Étrier de frein selon l'une des revendications précédentes,
**caractérisé en ce que** le moyen de soutien de garniture comprend plusieurs saillies qui soutiennent respectivement une garniture de frein mise en place dans le boîtier.

18. Étrier de frein selon la revendication 17,
**caractérisé en ce que** les saillies sont réalisées d'une seule pièce avec le boîtier.

19. Étrier de frein selon lui des revendications précédentes,
**caractérisé en ce que** le moyen de soutien de garniture (31) est agencé, en direction périphérique d'un disque de frein reçu dans le boîtier, approximativement au milieu entre la surface de contrebutée (33) et le dispositif de fixation de garniture (50).

20. Étrier de frein selon l'une des revendications précédentes,
**caractérisé en ce que** le moyen de soutien de garniture (31) et le dispositif de précontrainte (32) sont agencés, en direction périphérique d'un disque de frein reçu dans le boîtier, sensiblement approximativement à la même hauteur.

21. Étrier de frein selon l'une des revendications précédentes,
**caractérisé en ce que** le boîtier (30) est une pièce forgée qui est de préférence réalisée d'un seul tenant.

22. Étrier de frein selon l'une des revendications précédentes,
**caractérisé en ce que** le boîtier est une pièce fraisée et/ou une pièce de fonderie qui est réalisée en en une seule pièce, en deux pièces ou en plusieurs pièces.

23. Étrier de frein selon l'une des revendications précédentes,
**caractérisé en ce que** le boîtier (30) comprend un évidement (139) dans lequel s'engage une saillie (49, 49A, 49B) d'une garniture de frein (40) mise en place dans le boîtier (30).

24. Étrier de frein selon l'une des revendications précédentes,
**caractérisé en ce que** le boîtier (30) comprend au moins une fenêtre d'observation (139A, 139B) dans laquelle s'engage une saillie (49, 49A, 49B) d'une garniture de frein (40) mise en place dans le boîtier (30), ladite au moins une fenêtre d'observation étant de préférence réalisée de telle manière qu'elle permet d'observation de l'usure des garnitures de friction (47, 48) d'une garniture de frein (40) mise en place dans le boîtier (30).

25. Étrier de frein selon l'une des revendications précédentes,
**caractérisé en ce que** les évidements (41) dans les garnitures de freins (40) sont réalisés de telle manière que les garnitures de freins (40) mises en place dans le boîtier (30) sont précontraintes en direction de la surface de contrebutée (33) au moyen des forces exercées sur les garnitures de freins (40) par au moins un dispositif de précontrainte (32).

26. Étrier de frein selon l'une des revendications précédentes,
**caractérisé en ce que** les évidements (41) dans les garnitures de freins (40) sont réalisés en forme de demi-cercle.

27. Étrier de frein selon l'une des revendications 1 à 25,
**caractérisé en ce que** les évidements (41') dans les garnitures de freins (40') comportent des chanfreins, lesquels sont réalisés de telle manière que les garnitures de freins (40') mises en place dans le boîtier (30) sont précontraintes en direction de la surface de contrebutée (33) au moyen des forces exercées sur les garnitures de freins (40') par ledit au moins un dispositif de précontrainte (32).

28. Étrier de frein selon la revendication 27,
**caractérisé en ce que** les chanfreins sont réalisés rectilignes et présentent par rapport à la direction périphérique du disque de frein un angle d'environ 15° à environ 45°, de préférence environ 30°.

29. Étrier de frein selon la revendication 27,
**caractérisé en ce que** les chanfreins sont réalisés en ligne courbe et présentent une inclinaison par rapport à la direction périphérique du disque de frein dans une plage angulaire entre environ 15° et environ 45°, de préférence vers environ 30°.

30. Étrier de frein selon l'une des revendications précédentes,
**caractérisé en ce que** les garnitures de freins comportent une saillie pour venir s'engager dans l'évidement (139) dans le boîtier de l'étrier de frein.

31. Étrier de frein selon la revendication 30,
**caractérisé en ce que** les saillies (49) sont agencées sur un côté des garnitures de freins (40).

32. Étrier de frein selon la revendication 30,
**caractérisé en ce que** les saillies (49) sont agencées sensiblement au milieu et de préférence dans la région supérieure des garnitures de freins.
